# EUROPEAN PATENT SPECIFICATION

(11) **EP 2 399 039 B1**
(45) Date of publication and mention of the grant of the patent: **14.05.2014**
(21) Application number: 10704956.1
(22) Date of filing: 18.02.2010
(51) Int. Cl.: F16C 15/00, F16F 15/305

(54) **A FLYWHEEL**
SCHWUNGRAD
VOLANT

(30) Priority: 19.02.2009 GB 0902840
(43) Date of publication of application: 28.12.2011
(73) Proprietor: Ricardo UK Limited, West Sussex BN43 5FG (GB)
(72) Inventor: ATKINS, Andrew, Farquhar, West Sussex BN44 3PG (GB)
(74) Representative: Clark, Jane Anne
(86) International application number: PCT/GB2010/000278
(87) International publication number: WO 2010/094912

(56) References cited:
- DE-A1- 2 119 015
- DE-A1- 2 535 790
- DE-A1- 2 622 295
- DE-A1- 2 949 125
- DE-A1- 3 535 394
- US-A- 4 359 912

## Description

The invention relates to a flywheel and a method for constructing a flywheel for energy storage.

### Background of the Invention

Flywheels are known for the storage of energy in the form of kinetic energy, for example for use in vehicles. In such instances it is known to use a flywheel to store the energy which would otherwise be converted to heat in the vehicle's braking system when the vehicle decelerates, this stored energy then being available for use to accelerate the vehicle when desired.

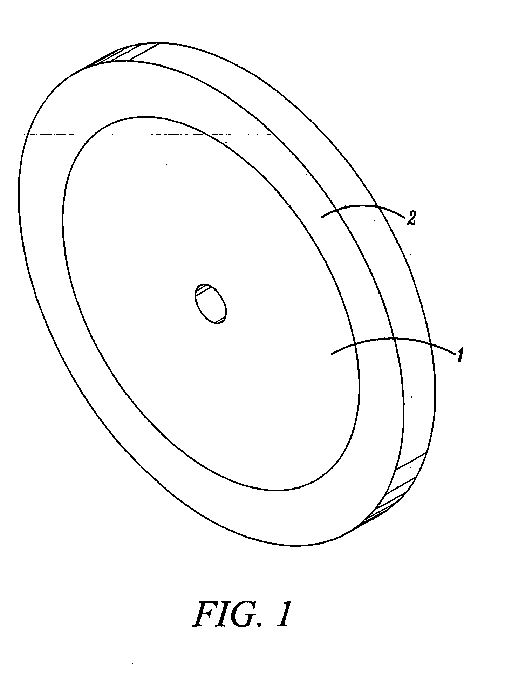

An existing type of flywheel according to Figure 1 has a central metallic support section (1) which can be mounted on a central support such as a shaft. At least one composite ring (2) is mounted on the central support section. The composite ring in this type of flywheel is filament wound from carbon fibre. When the flywheel is in rotation, the ring will tend to expand in diameter due to the centrifugal forces acting on it. The ring has high strength in hoop for re-acting the centrifugal forces when the flywheel is in rotation. However, the outer ring can become a loose fit on the central support section and potentially (dangerously) become dismounted from the central support section. In addition the radial stress can result in failure of the composite ring.

In order to counteract the tendency of the ring to grow, the ring is typically machined with a smaller inner diameter than the outer diameter of the central support section and is then mounted onto the central support section with an interference fit. The mismatch in diameters results in a pre-load such that that ring exerts an inward force onto the central support section. This inward preload is greatest when the flywheel is not rotating and results in a requirement for the central support section to be sufficiently structurally strong that it can withstand the preload force when the flywheel is stationary. It is known for more than one composite ring to be pressed together and further mounted onto the central support. The pre-load increases towards the centre of the flywheel and with the number of rings pressed together. Consequently a large amount of material may be required in the central support section of the flywheel in order to counteract this pre-load force, and this material, being near the centre of the flywheel, adds only very inefficiently to the rotational inertia of the flywheel. Further, if the hub is stiffer than the composite ring, as the speed of the flywheel increases and the pre-load reduces then the increased mass will lead to stress management problems in the hub.

Yet further, in the existing system, exceeding the maximum stress rating of the composite ring will result in failure. In the flywheel type above, the central support section exerts an outward force on the composite ring due to the preload. This force is in the same direction as the centrifugal forces acting on the ring when the flywheel is in rotation. Then, if the stiffness of the hub is lower than the composite ring, the ring must be strong enough to counteract the sum of the preload force and the centrifugal forces when the flywheel is rotating at maximum speed. A further problem with this type of flywheel is therefore that the preload reduces the maximum rotation speed of the flywheel.

A further problem with existing systems is that if a flywheel is to be coupled to, for example, a vehicle transmission, a splined coupling is normally required in order that high transient torque levels (for example when the vehicle gearbox ratio is changed quickly, thus requiring the flywheel to accelerate or decelerate rapidly) may be transmitted to the flywheel without slippage.

A flywheel of the type described in UK patent application 0723996.5, filing date 7 December 2007, overcomes the aforementioned limitations by providing a flywheel having a drive transfer element and a rim comprising a mass element, where the rim and the drive transfer element are coupled by a winding. However, it is desirable with this type of flywheel to have an indication of stress in the flywheel components as the flywheel is rotated at increasing speed.

Another fly wheel according to the preamble of claim 1 is described in the DE 2119015.

### Brief description of the invention

The invention is set out in the claims. Because a warning or indicator ring is incorporated with the flywheel to behave differently under rotation, when the flywheel reaches undesirable rotational speeds a detector can detect consequences of the different behaviour, for example, imbalance in the flywheel.

The indicator ring may be mounted to the flywheel with an interference fit, and is supported either by the support member or by the drive transfer element (for example, a shaft). The ring can be constructed from circumferentially wound fibre (for example, carbon fibre), or can be another material with sufficient strength in hoop to enable it to be rotated at the maximum designed flywheel speed without failing, and with a suitable stiffness as further described below. When mounted to the support member, the ring can be radially disposed inside or outside of the support member. When the ring is radially disposed inside of the support member, the ring has a stiffness which is greater than or substantially the same as that of the support member. When the ring is radially disposed outside of the support member, the ring has a stiffness which is lower than or substantially the same as that of the support member. The support member comprises circumferentially wound fibre, for example carbon fibre.

When mounted to the drive transfer element (for example, a shaft), the ring has a stiffness which is lower than or substantially the same as that of the drive transfer element.

The interference fit results in a pre-load between the ring and its mounting (for example, the support member) when the flywheel is at rest. The level of preload and the relative stiffnesses of the ring and the ring mounting are chosen such that when the flywheel is rotated at or in excess of a predetermined trigger speed, the preload is substantially overcome by centrifugal forces, causing the ring and support member to separate. Generally, the less stiff component will tend to stretch and "grow" more than the stiffer component. Notably, however, in the case where the ring and its mounting have substantially the same stiffness, the two components will nevertheless tend to separate under rotation because greater forces act upon the component which is at the greater radius from the axis of rotation. The combination of radial position and material stiffness can be adjusted accordingly to achieve separation at the desired predetermined speed. The predetermined speed is chosen to be lower than the speed at which flywheel failure is to be expected. The ring is fitted to its mounting by a press fit which results in a non-uniform stress distribution at the interference boundary.

In further aspects, the invention comprises methods of manufacturing, operating or assembling the flywheel.

### Figures

Embodiments of the invention will now be described with reference to the drawings, of which:
Figure 1 is a representation of a known flywheel;
Figure 2 is an isometric view of an embodiment of the present invention;
Figure 3 is a cross-sectional view of the embodiment of Figure 2;
Figure 4 is a view of a shaft construction;
Figure 5 is a detailed view of a winding pattern;
Figure 6 is a view of the winding at a shaft;
Figure 7 is a view showing alternative winding methods at a rim;
Figure 8 is a cross-sectional view of a flywheel incorporating a warning ring;
Figure 9 is a side view of the embodiment of Figure 8;
Figure 10 is a view of another embodiment incorporating a warning ring;
Figure 11 is a side view of the embodiment of Figure 10;
Figure 12 is a view of a further embodiment having a warning ring;
Figure 13 is a side view of the embodiment of Figure 12;

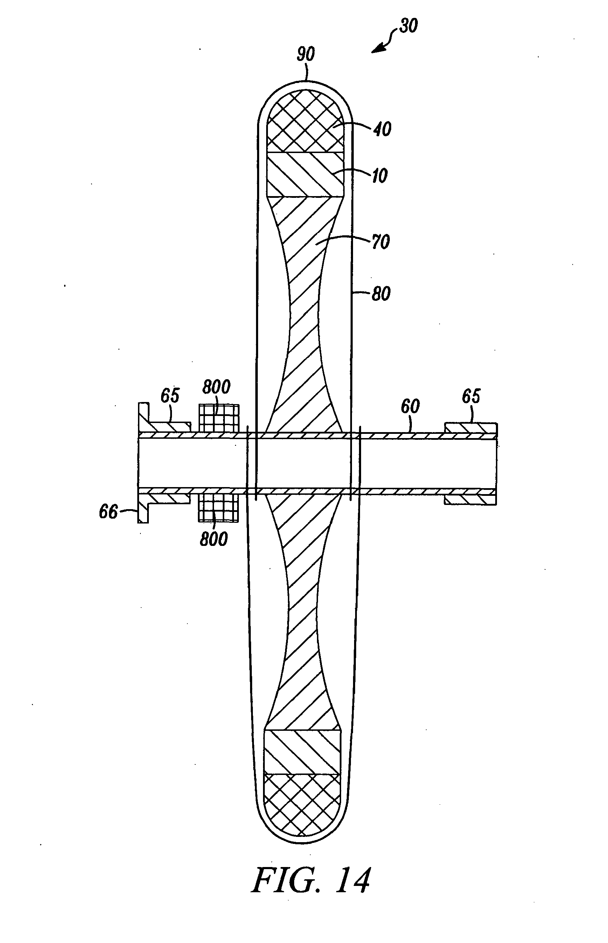

Figure 14 is a view of a yet further embodiment incorporating a warning ring.

### Detailed description

In overview, the apparatus and method described herein relates to a flywheel energy storage device where material used in its construction is deployed in an inertially efficient manner, and where the support structure is under tension, a rim comprising a mass element is held in place on its outer surface by a winding which also passes around a drive transfer element, rather than for example by a compressive interference fit to its inner surface.

In other aspects a support element can surround the rim to counteract centrifugal forces and a torsionally compliant or resilient drive transfer element such as shaft can be provided.

The winding may be configured in a number of ways as described below and may also be pre-tensioned. The drive transfer element may be a shaft, which may be hollow and may be constructed from wound carbon fibre. The rim may comprise a circumferential support member (also referred to as a support element) and a mass element mounted radially inwards of the support member.

In embodiments the rim may be constructed of a composite material, for example a wound carbon fibre and resin. The mass element may be a ring, pressed or moulded into the reinforcing element. Alternatively, the mass element may comprise one or more dense elements, which may be linked as in a chain, incorporated into the rim by moulding, drilling, pressing or adhesive attachment to the inside of the reinforcement element.

The drive transfer element may be a hollow shaft for instance, and this may be formed from a wound carbon fibre composite. The composite may be wound with fibres oriented in directions arranged such that both bending of the shaft and twisting of the shaft result in a change in the length of the fibres, these deformations therefore being resisted by the fibre's natural tendency to resist changes in length. The shaft may thereby be formed so that it is compliant to a twisting motion.

A warning or indicator ring is mounted to the flywheel rim, and the flywheel is arranged such that at least one of the warning ring and other components move, expand, contract, deform or distort relative to the other under centrifugal force of sufficient magnitude. This can affect rotation of the assembly, for example by unbalancing it, which can be monitored or detected to provide an indication of overload.

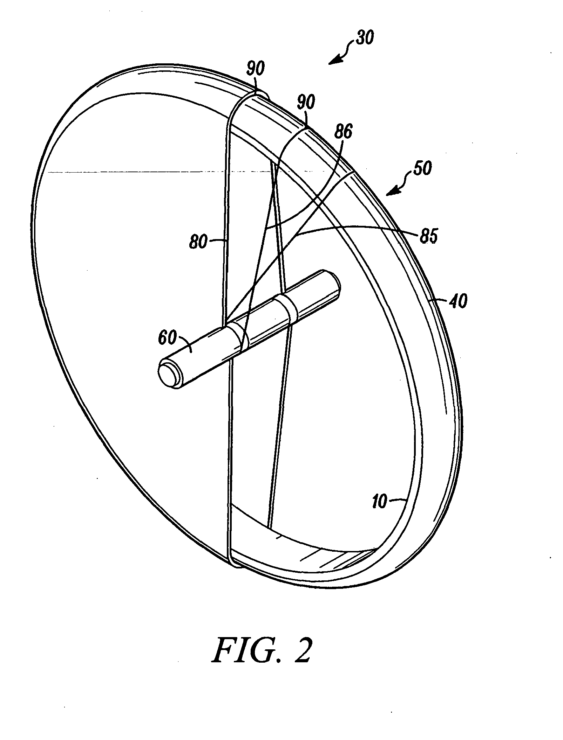

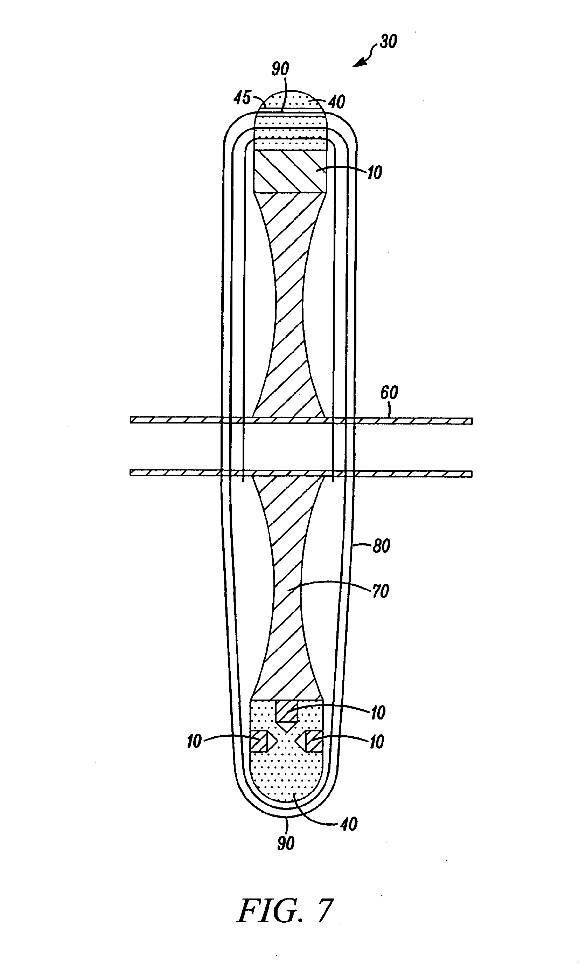

Referring to Figures 2 and 7, in order to effectively provide a high inertia, a rim (50) including a mass element (10) comprising, for example, a ring of relatively massive material is disposed at a relatively large radius, compared with the size of the flywheel (30), from a drive transfer element such as a shaft (60) providing a central rotating axis (20). The mass element (10) has a high density in order to effectively provide inertia. Suitable materials may be lead or steel for example, although other materials could be used. The mass element (10) is subject to stress when the flywheel (30) is in rotation, this being induced by centrifugal forces.

An outer circumferential support member (40) is located radially outside the mass element. The support member (40) has a high hoop strength and is able to counteract the centrifugal forces acting on the mass element (10) when the flywheel (30) is in rotation. The support member (40) is preferably a carbon fibre composite, wound in a circumferential direction so as to impart a high strength in hoop. In the embodiment shown the support member (40) is pressed onto the mass element (10) with a small interference preload such that the two are effectively joined, forming a rim (50). The preload only needs to be small since it merely functions to hold the two elements together in an interference fit when the flywheel is stationary. Alternatively, the two may be joined by an adhesive bond or similar. The more efficient placement of mass, concentrating mass near the rim of the flywheel results in a lighter flywheel for a given energy storage capacity. Although the mass element is shown in Figure 2 as a continuous ring, alternatively it may be separate ring segments, or may be discrete elements of mass. For example, an alternative arrangement is shown in Figure 7 wherein the mass may be inserted or moulded into the support member (40), either as a ring, or as discrete elements into receiving holes in the support member (40).

Referring to Figures 2, 5 and 6, a winding couples the rim (50) to the shaft (60). The winding is configured such that it consists of substantially or partially radial portions (80) extending from the shaft (60) to the rim (50) and substantially axial portions (90) extending around the rim (50). In the embodiment shown the winding is filament wound in a winding operation proceeding as follows: radial portions from shaft (60) to rim (50), axial portions over the rim (50) so as to form a 'sling', and then radial portions back from rim (50) to shaft (60), in a repeating fashion. The winding (87) may pass at least partially around the circumference of the shaft (60) between some but not necessarily all iterations of the winding operation. The winding (80, 90) will stretch slightly as the rim (50) grows under centrifugal forces and will exert a counteracting force on the rim (50). Thereby, the winding (80, 90) assists the support member (40) of the rim (50) in resisting the centrifugal forces acting on the mass element (10) and in resisting the radial growth of the rim (50). The winding (80, 90) could be made of a fibre, including carbon, glass fibre, Kevlar, Zylon or nylon, or could be made of a metal wire in low stress applications. As a result more massive mounting arrangements such as a central support section or spokes are not required.

In embodiments where the mass element comprises a ductile or malleable material, the support member (10) and the winding (80, 90) can be pre-tensioned during manufacture by the following method: The flywheel is assembled in the way herein previously described, with drive transfer element (60) and rim (50) coupled by a winding, the rim (50) comprising a mass element (10) and an outer support member (40). No or negligible pre-load inwardly need be applied at this stage. The flywheel is then spun at an angular velocity sufficiently high that the centrifugal forces on the mass element (10) are sufficient to cause it to yield and smaller than its ultimate tensile strength. As a result, the mass element (10) yields outwardly and its circumference increases. The increase in circumference of the mass element (10) results in a secure interference fit between mass element (10) and support member (40), thereby stretching and pre-tensioning the support member (40) and also stretching and pre-tensioning the winding (80, 90). The mass element (10) has a low to moderate Young's modulus, which is less than that of the support member (40), such that the mass element's (10) tendency to deform under centrifugal forces is greater than that of the support member (40). This operation results in a pre-tensioning of both the support member (40) and the winding (80, 90). In this way, both the support member (40) and the winding (80, 90) are pre-tensioned, compared to the result of fitting the mass element (10) to the support member (40) with an interference fit before adding the winding, which would result in a pre-loading of the support member (40) only. In other embodiments the above method can be used to pre-tension the support member alone.

In other embodiments, a material with an extremely low Youngs's modulus comprises the mass element (10), such as Lead. The use of a dense liquid such as Mercury results in a flywheel in which the mass element (10) is self-balancing. The support member (40) constrains the mass element (10) radially inside the support member (40).

Suitably ductile or malleable materials for use in comprising the mass element (10) have a large ultimate tensile strength compared with their first point of yield strength, defining a sufficiently large ductile region that the yield point of the material can be exceeded during the manufacturing operation detailed above without a risk of exceeding the ultimate tensile strength of the material. A suitable ratio of yield strength to ultimate tensile strength would be close to 1:2. The material used for the mass element (10) also has a first point of yield which is sufficiently low that it may be exceeded at moderate flywheel speeds such that failure of other parts of the flywheel is avoided, such parts being for instance the outer support member (40) and winding (80, 90). The material also has properties such that the centrifugal forces resulting in the pre-loading process cause a sufficiently large circumferential deformation of the mass element (10) that the resulting deformation of the support member (40) and winding (80, 90) results in a pre-load which significantly counteracts centrifugal forces acting on the mass element (10) when it is rotating at the typical rotational speeds encountered during normal operation.

In embodiments where the mass element (10) is not ductile and is not preloaded using the above method, the ultimate tensile strength of the mass element is optimally close to that of the support member (40) and the yield strength of the mass element (10) is as close as possible to the ultimate tensile strength of the support member (40).

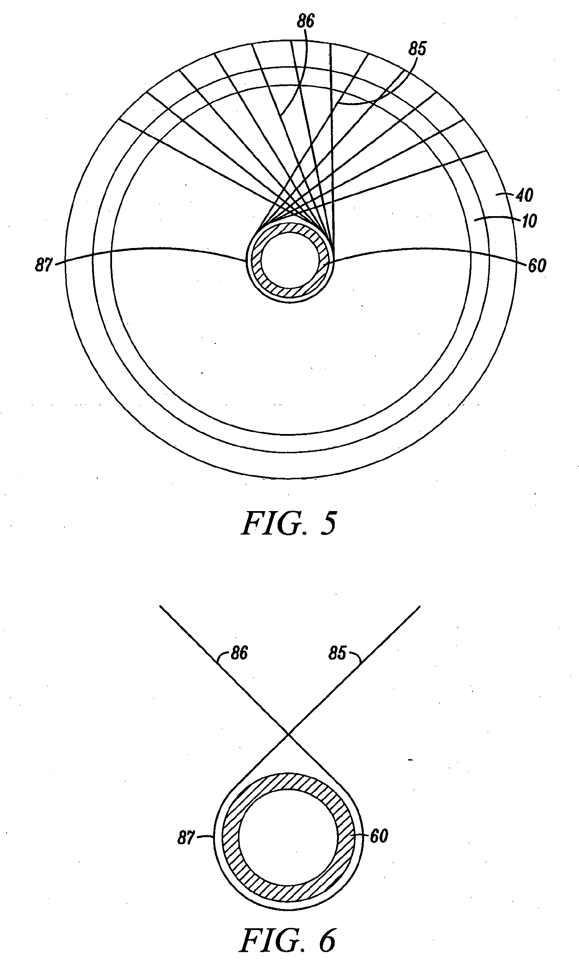

Referring to Figure 5, the angle of the winding portions (80) from shaft (60) to rim (50) may be selected to determine the characteristics of torque transfer between shaft (60) and rim (50). The angle used may be selected between i) a tangent to the shaft circumference and ii) perpendicular to the shaft circumference. A selected angle which is close to a perpendicular angle to the shaft (60) will enhance the contribution made by the winding (80) to the counteraction of centrifugal forces acting on the mass element (40). A selected angle which is close to a tangent to the shaft circumference will enhance the ability of the winding (80) to transfer torque between the rim (50) and the shaft (60). A compromise angle within the range of angles above can be selected in order to optimise the contribution made by the winding. Since the winding (80, 90) is only able to transfer torque when in tension, the radial winding portions (80) can be arranged in both clockwise (85) and anticlockwise (86) directions such that either clockwise (85) or anticlockwise (86) winding portions are in tension, depending on whether the flywheel is accelerating or decelerating. Yet further the axial position along the shaft about which the winding is arranged can be varied to vary the strength of tensile support.

Referring to Figure 2, the number of turns of the winding (80, 90), and as a result its strength, may be varied. Likewise, the number of turns of fibre in the carbon support member (40) may be varied so as to alter its strength. Since the reaction against the centrifugal forces acting on the mass element (10) is a combined reaction from the support member (40) and the winding (80, 90), the relative contribution from each can be varied by altering the number of turns in the winding (80, 90) and the number of turns in the support member (40). In one aspect, the support member (40) can be removed altogether, the centrifugal forces acting on the mass element being counteracted solely by the winding (80, 90). Yet further the winding can extend continuously around the whole circumference or can be interrupted with gaps in the circumferential direction between individual or groups of fibres, providing a "spoke-like" arrangement. For example, in the case where the mass element is a number of discrete elements the winding at the rim (90) can be aligned with the discrete mass elements.

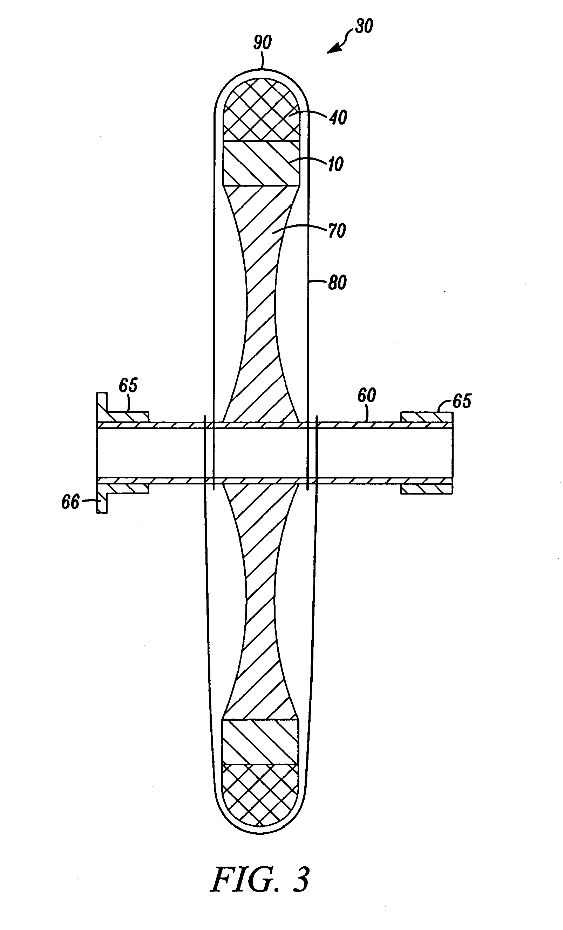

Referring to Figure 3, the rim (50) is at least temporarily supported by a carrier portion (70) on the drive transfer element, which may be a shaft (60). The carrier portion is preferably made of a lightweight material so as to reduce overall flywheel mass and concentrate mass at the periphery. The carrier portion may for example be made of wood, wax, resin or other lightweight material. The carrier portion allows mounting of the rim on the drive transfer element while the winding is being applied during manufacture. The carrier portion may be removed or removable after the winding has been applied to the rim and drive transfer elements, by way of erosion, dissolution, melting or sublimation.

The winding and the carrier portion are relatively light compared with the rim, thereby the flywheel may thus be configured with a rim comprising a mass element such that the majority of the mass of the flywheel is near the rim where it is most inertially efficient. The carrier portion (70) may be glued to the shaft (60) and/or the rim (50).

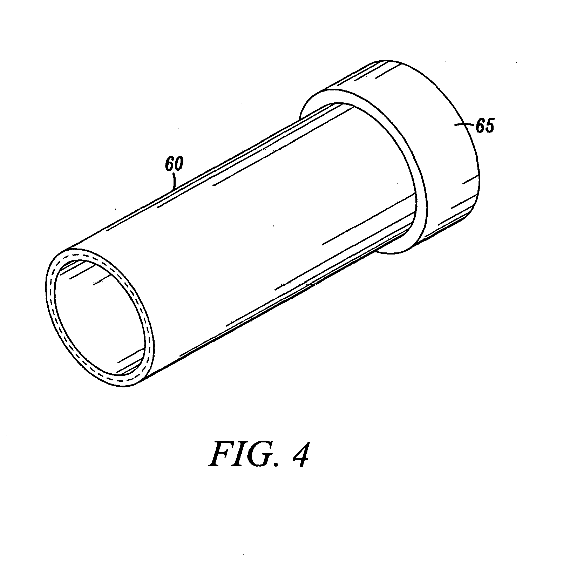

Referring to Figure 4, the shaft (60) may be solid, but is preferably hollow so as to reduce its mass. The shaft (60) is preferably a carbon fibre composite, woven such that it is torsionally compliant and axially stiff. The shaft could however be made of other materials such as glass fibre, steel, titanium, other metals or composites. In the case of a fibre composite shaft, the weave pattern of the fibres may be altered so as to influence the degree of resistance to bending and twisting, and to fine tune the torsional compliance of the shaft. The shaft may have one or more bearing surfaces (65) pressed or glued onto it. One or more bearing surfaces (65) may also incorporate a drive coupling (66), or a separate drive coupling may be glued or pressed onto the shaft. The torsional compliance of the shaft has the effect of limiting peak torque levels at the drive coupling and therefore allows the use of drive couplings with lower peak torque handling capability than that of splined drive couplings, for example frictional or magnetic couplings.

Manufacture of the flywheel can be further understood by referring to Figures 3 and 6. The winding (80, 90) can be formed by a 'wet winding' process whereby a binder is provided for example using a resin or adhesive. The fibre which forms the winding (80, 90) can be impregnated with a resin or adhesive and can be wound while the resin or adhesive was still 'wet', that is to say that the resin or adhesive is in the uncured state. Alternatively, the support member (40) can be coated with a resin or adhesive before or during the process of forming the winding (80, 90) such that the winding (80, 90) adheres to the support member (40). Likewise, the shaft (60) can be coated with a resin or adhesive prior to or during the winding process such that the winding (80, 90) adheres to the shaft (60). These techniques enhance the transfer of torque between shaft (60) and rim (50). Alternatively, an interference fit between winding (80, 90), shaft (60) and rim (50) could be used.

Referring to Figure 7, the winding (80, 90) and the support element (40) have henceforth been described as separate wound elements. However, it would be possible to combine both elements by, for instance, interleaving turns of the winding (80, 90) and turns of the support element (40). It would also be possible to first form the support element (40), form holes (45) through it, and then form the winding (80, 90) with the winding portions (80, 90) passing through the holes (45) in the support element (40). The shape of the support element (40) may be hemispherical or parabolic in order to spread stress in the portion of the winding (90) which contacts the support element (40). Any smooth sectional outline shape is envisaged as being suitable.

Referring to Figures 2 and 5, spaces may be left between the winding portions at the rim (80, 90) such that access to the carrier portion (70) remains. The carrier portion (70) may be left in place or may be removed by blasting, erosion, dissolution, melting or sublimation, after the winding (80, 90) has been formed. The carrier portion could for example be made of ceramic, resin, wax or other suitable material to enable this operation. Removing the carrier portion (70) would result in an even lighter flywheel having an even lower proportion of inertially inefficient mass. With the carrier portion removed, the winding provides the only substantial means of support for the rim on the drive transfer element.

In alternative approaches the flywheel can be constructed with the circumferential support member providing hoop strength but the ring being mounted using a conventional central support section rather than a winding.

In use the flywheel may be mounted in a vehicle or any other appropriate setting for storage of energy or other purpose such as stabilisation and coupled or decoupled from a drive-providing or receiving component such as a motor, engine or dynamo as appropriate via the drive transfer element.

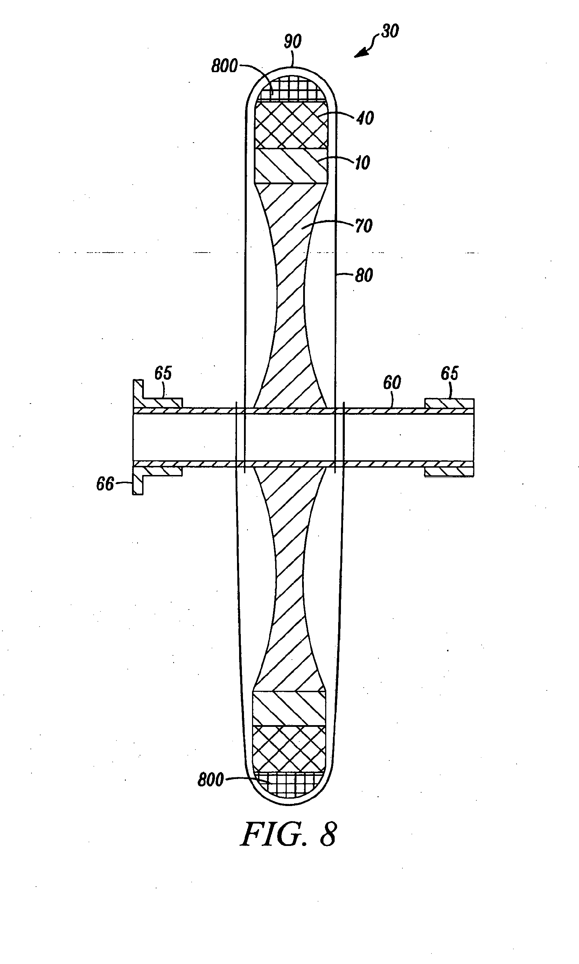

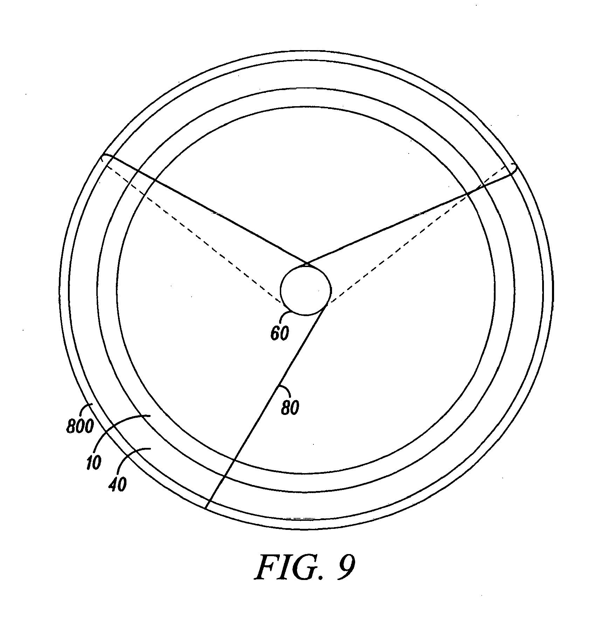

Referring to Figures 8 and 9, which show a first embodiment of a flywheel (30) having a warning or indicator ring (800), it can be seen that the warning ring (800) is mounted on the outer periphery of the support element (40). The warning ring (800) is mounted radially outside the support element (40), using an interference fit, and is typically pressed into place. The interference fit between the warning ring (800) and the support element (40) results in a preload force between these two components when the flywheel (30) is at rest. The assembly of warning ring (800) to support element (40) results in a residual non-uniform stress between the two. The winding (80) passes around the warning ring (800), support element (40) and mass element (10). The flywheel is finely balanced to avoid vibration when rotating. During manufacture, the balancing operation is performed after the warning ring is assembled such that it is balanced with the warning ring in place.

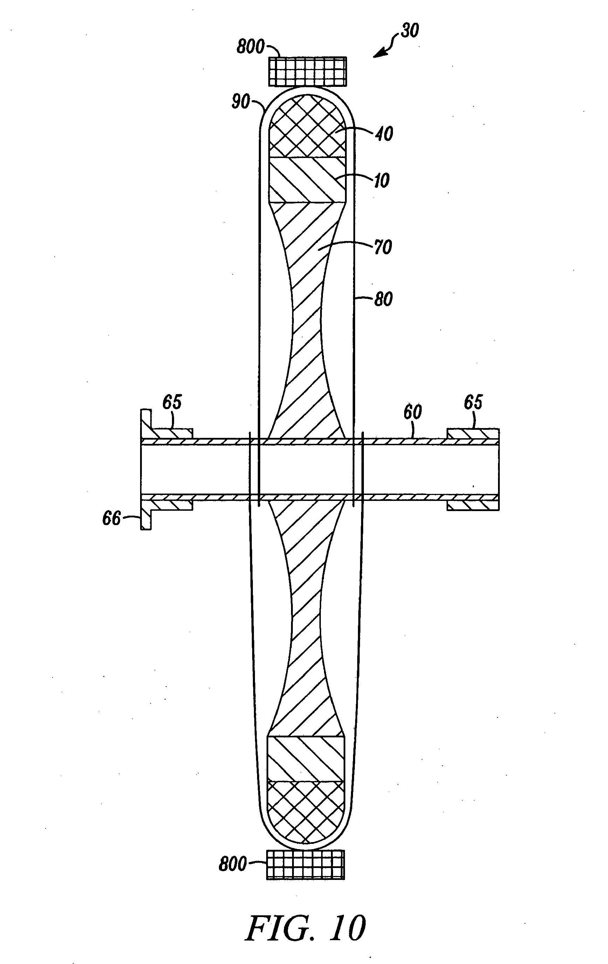

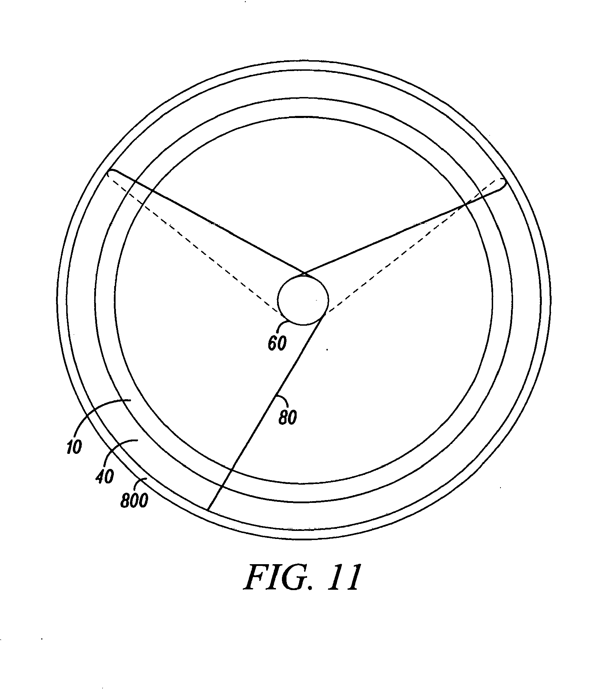

As shown in Figs 8 and 9, the winding (80) passes around the warning ring (800) and support element (40) Thus, the winding tends to hold the warning ring (800) in contact with the support element (40), counteracting the warning ring's tendency to grow away from the support element (40). However, by selecting the stiffnesses of the warning ring (800), winding (80) and support element (40) appropriately it is possible to ensure that the warning ring (800) is able to move radially (i.e. grow) away from the support element (40) under centrifugal forces. In other embodiments (such as shown in Figures 10 and 11) the warning ring (800) is pressed onto the outside of the support element (40) and radially outside the winding (80).

In the embodiments shown in Figures 8 to 11, the warning ring (800) has a lower Young's modulus (is less stiff) than the support element (40) such that in operation when the flywheel is rotated, the warning ring (800) grows radially (under centrifugal forces) a greater amount than the support element (40) grows, leading to separation when the centrifugal force reaches a sufficient magnitude. In the embodiments shown in figures 8 and 9 where the winding passes around the warning ring (800), the stiffness of winding (80) and warning ring (800) are together low enough such that the warning ring (800) and winding (80) grow more than the support element (40) grows when the flywheel is rotated. The warning ring (800) need only be a lightweight ring with relatively low strength compared to the support element (40), since the warning ring (800) does not substantially support the mass element (10).

Expansion of the warning ring leads to a relaxing of the pre-load between the warning ring (800) and the support element (40). At a trigger rotational speed or centrifugal force magnitude (predetermined by the amount of interference fit pre-load, and the relative stiffnesses of the warning ring and the support element), the pre-load is overcome and the warning ring (800) and support element (40) at least partially separate. The separation is likely to occur non-uniformly for example, because the interference fit has a non-uniform stress distribution at the interference boundary, leading to a movement off-centre and an imbalance in the rotating mass. Furthermore, the residual non-uniform stresses between the warning ring (800) and the support element (40) are at least partially released by the movement of the warning ring (800) with respect to the support element (40). This movement causes the flywheel (which is finely balanced during manufacture) to go at least slightly out of balance. The imbalance cause by relaxation of the residual stresses is permanent (that is, the imbalance is permanent unless the flywheel is subsequently at least partially remanufactured, for example by at least performing the step of re-balancing the flywheel and optionally, prior to rebalancing, performing the steps of removing and re-mounting the warning ring onto the support element such that the residual non-uniform stress is restored, thereby restoring the capacity of the flywheel to go out of balance if the pre-load is again overcome) and can be considered to be evidence of a mechanical "fuse" having been triggered.

The resulting imbalance causes a vibration when the flywheel is rotating and the vibration can be detected by a vibration sensor so as to give an indication of excessive flywheel speed, the indication being separate from any indication derived from, for example, a flywheel speed sensor. An example of a suitable vibration sensor is a piezo-electric accelerometer. Thus, even if the main flywheel speed sensor malfunctions, a separate and independent indication of excessive flywheel speed is provided. Furthermore, a permanent indication results showing that the flywheel has at some point been operated above its design speed and thus might fail at some point in the future.

In the second embodiment shown in Figs 10 and 11 the warning ring passes outside the winding (80) and its relative stiffness is selected accordingly to provide the same effects.

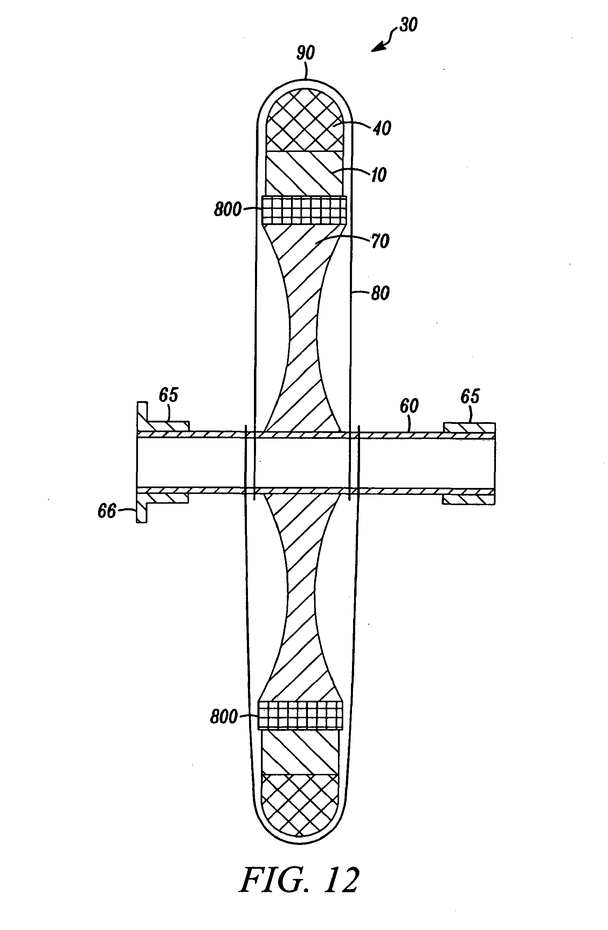

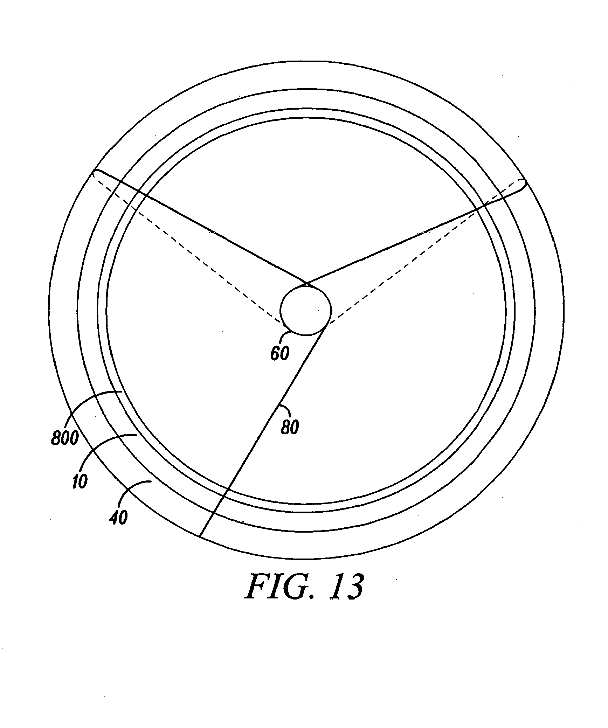

In a further embodiment, as shown in Figures 12 and 13, the warning ring (800) is mounted with an interference fit, radially inside the support element (40). The mass element (10) is interposed between the support element (40) and the warning ring (800) in this embodiment, but in other embodiments can be incorporated in the support element (40) as previously described or the warning ring can be interposed between the mass element (10) and support element (40). In these further embodiments the warning ring (800) has a higher Young's modulus (is stiffer) than the support element (40).

In operation when the flywheel is rotated, the support element (40) grows radially (under centrifugal forces) a greater amount than the warning ring (800) grows. Similarly to the previous embodiments, the pre-load between the warning ring (800) and support element (40) is overcome by centrifugal forces, allowing the warning ring (800) to move. When the support element (40) grows radially such that the space within it is larger than the outside diameter of the warning ring (800), the warning ring (800) is able to move off-centre within the support element (40), leading to an imbalance. Furthermore, under influence of the non-uniform residual stresses (residual from the press-fitting assembly operation during manufacture whereby the warning ring is pressed into the centre of the support element), the warning ring (800) is caused to move within the support element when the pre-load is overcome by centrifugal forces, thereby causing the flywheel to go permanently out of balance, causing vibration. As previously described, vibration can be detected by a sensor and used as a warning indication.

In a yet further embodiment, the warning ring (800) is press-fitted to the drive transfer element (which is, for example, a shaft) with an interference fit which results in a pre-load. As before, the flywheel is finely balanced. The warning ring (800) is less stiff than the shaft (60) and grows radially more than the shaft grows when the flywheel rotates. At a predetermined speed, the pre-load is overcome, allowing the warning ring (800) to move on the shaft which causes an imbalance which can be detected prior to mechanical failure.

The deliberate production of an imbalance when a flywheel speed exceeds a trigger speed, and detection of a vibration caused thereby, as described above, provides a warning that the flywheel is being operated or has been operated at above its maximum safe operating speed. This warning can be determined separately from a primary flywheel speed monitoring system and thus provides a fail-safe second indication of excessive flywheel speed in the event that the primary speed monitoring system fails. It will be noted that detection of overload can be triggered by setting at the detector the level of imbalance signifying overload, or by modifying the relative properties of the warning ring and/or other rim components, or any combination thereof. The system can be calibrated to indicate excessive speed when all or part of the warning ring detaches, or when relative movement/dimension change is sufficient to create a detectable or threshold-surpassing imbalance.

The embodiments where the warning ring (800) is enclosed by the winding (80) have the advantage that should the flywheel be operated at a speed higher than the trigger speed, with the result that the warning ring becomes loosened from the support element (40), the warning ring (800) is contained within the winding (80) and there is no danger of the warning ring (800) becoming completely detached.

It will be seen that, as a result of the configuration described above, a stronger, safer and more efficient flywheel can be provided.

## Claims

1. A flywheel (30) having as components a drive transfer element (60) and a rim (50), the drive transfer element (60) being coupled to the rim (50) by a winding (80, 90) around each, wherein the rim (50) comprises a mass element (10) and a support element (40), and wherein an indicator ring (800) is mounted via an indicator ring mounting to the flywheel (30) for rotation therewith, the indicator ring (800) being formed so as to behave differently under rotation than a flywheel component;
**characterised in that** the indicator ring (800) deforms differently than the flywheel component under rotation of the flywheel (30) to achieve a separation from the indicator ring mounting under a predetermined speed lower than the speed under which flywheel failure is to be expected.

2. A flywheel (30) as claimed in claim 1 in which the indicator ring (800) is mounted to the flywheel (30) by an interference fit, and optionally in which the interference fit results in a predetermined pre-load between the indicator ring (800) and its mounting when the flywheel (30) is at rest.

3. A flywheel (30) as claimed in claim 1 or 2 in which the support element (40) comprises a circumferential support element at least partially disposed radially outside the mass element (10).

4. A flywheel (30) as claimed in any preceding claim wherein the indicator ring (800) is supported by the support element (40), and optionally wherein the indicator ring (800) is mounted substantially radially outside the support element (40), and optionally wherein the indicator ring (800) has a stiffness less than or substantially equal to that of the support element (40) to deform differently under rotation.

5. A flywheel (30) as claimed in any preceding claim wherein the indicator ring (800) is mounted substantially radially inside the support element (40), and optionally wherein the indicator ring (800) has a stiffness greater than or substantially equal to that of the support element (40) to deform differently under rotation.

6. The flywheel (30) of claim 1 wherein the drive transfer element (60) comprises a shaft and the indicator ring (800) is mounted on the shaft.

7. The flywheel (30) of any preceding claim wherein the support element (40) comprises circumferentially wound fibre, and preferably the circumferentially wound fibre is carbon, and optionally wherein the flywheel (30) is balanced as an assembly.

8. The flywheel (30) of claims 2 to 7 in which the interference fit has a non-uniform stress distribution at the interference boundary.

9. The flywheel (30) of any preceding claim further comprising a detector for detecting differential behaviour of the indicator ring (800) and flywheel (30) under rotation, and optionally in which the detector is arranged to detect an imbalance caused by said differential behaviour.

10. A method of constructing a flywheel (30) comprising the steps of providing a winding (80) around a drive transfer element (60) and a rim (50) and mounting an indicator ring (800) via an indicator ring mounting to the flywheel (30) for rotation therewith, wherein the rim (50) comprises a mass element (10) and a support element (40), and wherein the indicator ring (800) is formed so as to behave differently under rotation than a flywheel component;
**characterised in that** the indicator ring (800) deforms differently than the flywheel component under rotation of the flywheel (30) to achieve a separation from the indicator ring mounting under a predetermined speed lower than the speed under which flywheel failure is to be expected.

11. A method as claimed in claim 10 in which the indicator ring (800) is mounted using an interference fit.

12. The method of claim 10 wherein the support element (40) comprises a circumferential support element at least partially radially disposed outside the mass element (10) and the indicator ring (800) is mounted to the support element (40), and optionally wherein the indicator ring (800) is mounted substantially radially outside the support element (40) or the indicator ring (800) is mounted substantially radially inside of the support element (40).

13. The method of claims 10 to 12 wherein the indicator ring (800) is pressed onto or into the flywheel (30) such that a pre-load results between the indicator ring (800) and its mounting having non-uniform stress distribution at the interference boundary, and optionally wherein the flywheel (30) is balanced on assembly.

14. The method of claims 10 to 13 wherein the mass element (10) is ductile and wherein both the winding (80) and the support element (40) are preloaded by rotating the flywheel (30) in a pre-loading step such that centrifugal forces acting on the mass element (10) cause it to yield outwardly, and optionally wherein in the pre-loading step the flywheel (30) is rotated at a speed greater than normal operating rotational speeds and lower than a speed which would cause the pre-load between the indicator ring (800) and its mounting to be overcome.

15. A method of operating a flywheel (30) as claimed in any of claims 1 to 9 and/or fabricated or claimed in any of claims 10 to 14, the method of operating comprising rotating the flywheel (30) and monitoring for an imbalance in the flywheel (30) to indicate overload.

## Patentansprüche

1. Schwungrad (30), das als Komponenten ein Antriebsübertragungselement (60) und eine Felge (50) aufweist, wobei das Antriebsübertragungselement (60) jeweils durch eine Wicklung (80, 90) an der Felge (50) gekoppelt ist, wobei die Felge (50) ein Massenelement (10) und ein Stützelement (40) umfasst, und wobei ein Indikatorring (800) mit Hilfe einer Indikatorringbefestigung an dem Schwungrad (30) zur Drehung mit demselben befestigt ist, wobei der Indikatorring (800) so gebildet ist, dass er sich bei Drehung anders als eine Schwungradkomponente verhält;
**dadurch gekennzeichnet, dass** sich der Indikatorring (800) bei Drehung des Schwungrades (30) anders als die Schwungradkomponente verformt, um eine Trennung von dem Indikatorring zu erreichen, der sich mit einer vorgegebenen Drehzahl befestigt, die niedriger ist als die Drehzahl, bei der ein Ausfall des Schwungrades zu erwarten ist.

2. Schwungrad (30) nach Anspruch 1, wobei der Indikatorring (800) durch Presspassung an dem Schwungrad (30) befestigt ist, und optional wobei die Presspassung zu einer vorbestimmten Vorspannung zwischen dem Indikatorring (800) und seiner Befestigung führt, wenn sich das Schwungrad (30) im Ruhezustand befindet.

3. Schwungrad (30) nach Anspruch 1 oder 2, wobei das Stützelement (40) ein Umfangsstützelement umfasst, das mindestens teilweise radial außerhalb des Massenelements (10) angeordnet ist.

4. Schwungrad (30) nach einem der vorhergehenden Ansprüche, wobei der Indikatorring (800) durch das Stützelement (40) gestützt wird, und optional wobei der Indikatorring (800) im Wesentlichen radial außerhalb des Stützelements (40) angebracht ist, und optional wobei der Indikatorring (800) eine Steifigkeit aufweist, die kleiner als die oder gleich der des Stützelements (40) ist, um sich bei Drehung anders zu verformen.

5. Schwungrad (30) nach einem der vorhergehenden Ansprüche, wobei der Indikatorring (800) im Wesentlichen radial innerhalb des Stützelements (40) angebracht ist, und optional wobei der Indikatorring (800) eine Steifigkeit aufweist, die größer als die oder gleich der des Stützelements (40) ist, um sich bei Drehung anders zu verformen.

6. Schwungrad (30) nach Anspruch 1, wobei das Antriebsübertragungselement (60) eine Welle umfasst und der Indikatorring (800) auf der Welle angebracht ist.

7. Schwungrad (30) nach einem der vorhergehenden Ansprüche, wobei das Stützelement (40) in Umfangsrichtung gewickelte Fasern umfasst, und wobei die in Umfangsrichtung gewickelten Fasern vorzugsweise aus Kohlenstoff bestehen, und optional wobei das Schwungrad (30) als Baugruppe ausgewuchtet ist.

8. Schwungrad (30) nach Anspruch 2 bis 7, wobei die Presspassung an der Presspassungsgrenze eine ungleichmäßige Spannungsverteilung aufweist.

9. Schwungrad (30) nach einem der vorhergehenden Ansprüche, das ferner einen Detektor zum Erfassen einer Verhaltensdifferenz des Indikatorrings (800) und des Schwungrades (30) bei Drehung umfasst, und optional wobei der Detektor so angeordnet ist, dass er eine Unwucht erfasst, die durch die Verhaltensdifferenz verursacht wird.

10. Verfahren zum Herstellen eines Schwungrades (30), das die Schritte des Bereitstellens einer Wicklung (80) um ein Antriebsübertragungselement (60) und eine Felge (50) umfasst, und Befestigen eines Indikatorrings (800) mit Hilfe einer Indikatorringbefestigung an dem Schwungrad (30) zur Drehung mit demselben, wobei die Felge (50) ein Massenelement (10) und ein Stützelement (40) umfasst und wobei der Indikatorring (800) so gebildet ist, dass er sich bei Drehung anders als eine Schwungradkomponente verhält;
**dadurch gekennzeichnet, dass** sich der Indikatorring (800) bei Drehung des Schwungrades (30) anders als die Schwungradkomponente verformt, um eine Trennung von dem Indikatorring zu erreichen, der sich mit einer vorgegebenen Drehzahl befestigt, die niedriger ist als die Drehzahl, bei der ein Ausfall des Schwungrades zu erwarten ist.

11. Verfahren nach Anspruch 10, wobei der Indikatorring (800) mit Hilfe einer Presspassung befestigt ist.

12. Verfahren nach Anspruch 10, wobei das Stützelement (40) ein Umfangsstützelement umfasst, das mindestens teilweise radial außerhalb des Massenelements (10) angeordnet ist und wobei der Indikatorring (800) an dem Stützelement (40) angebracht ist, und optional wobei der Indikatorring (800) im Wesentlichen radial außerhalb des Stützelements (40) angebracht ist oder der Indikatorring (800) im Wesentlichen radial innerhalb des Stützelements (40) angebracht ist.

13. Verfahren nach Anspruch 10 bis 12, wobei der Indikatorring (800) auf oder in das Schwungrad (30) gedrückt wird, so dass zwischen dem Indikatorring (800) und seiner Befestigung eine Vorspannung resultiert, die eine ungleichmäßige Spannungsverteilung an der Presspassungsgrenze aufweist, und optional wobei das Schwungrad (30) bei der Montage ausgewuchtet wird.

14. Verfahren nach Anspruch 10 bis 13, wobei das Massenelement (10) verformbar ist, und wobei sowohl die Wicklung (80) als auch das Stützelement (40) durch Drehen des Schwungrades (30) in einem Vorspannschritt vorgespannt werden, so dass Fliehkräfte, die auf das Massenelement (10) wirken, dazu führen, dass es sich nach außen verlagert, und optional wobei das Schwungrad (30) bei dem Vorspannungsschritt mit einer Drehzahl gedreht wird, die größer als die normalen Betriebsdrehzahlen und niedriger als eine Drehzahl ist, die dazu führen würde, dass die Vorspannung zwischen dem Indikatorring (800) und dessen Befestigung überwunden würde.

15. Verfahren zum Betreiben eines Schwungrades (30) nach einem der Ansprüche 1 bis 9 und/oder das in einem der Ansprüche 10 bis 14 beansprucht oder gemäß denselben hergestellt ist, wobei das Verfahren zum Betreiben die Drehung des Schwungrades (30) und die Überwachung auf eine Unwucht in dem Schwungrad (30) umfasst, um eine Überlastung anzuzeigen.

## Revendications

1. Volant d'inertie (30) comportant comme éléments constitutifs un élément de transmission (60) et une jante (50), l'élément de transmission (60) étant accouplé à la jante (50) par un enroulement (80, 90) autour de chacun, dans lequel la jante (50) comprend un élément de masse (10) et un élément de support (40), et dans lequel une couronne indicatrice (800) est montée par l'intermédiaire d'un montage de couronne indicatrice sur le volant d'inertie (30) pour une rotation avec celui-ci, la couronne indicatrice (800) étant formée de façon à se comporter différemment d'un élément constitutif du volant d'inertie en rotation ;
**caractérisé en ce que** la couronne indicatrice (800) se déforme différemment de l'élément constitutif du volant d'inertie durant la rotation du volant d'inertie (30) pour produire une séparation du montage de la couronne indicatrice à une vitesse prédéterminée inférieure à la vitesse à laquelle on peut s'attendre à une défaillance du volant d'inertie.

2. Volant d'inertie (30) selon la revendication 1, dans lequel la couronne indicatrice (800) est montée sur le volant d'inertie (30) par ajustement serré, et optionnellement dans lequel l'ajustement serré produit une précontrainte prédéterminée entre la couronne indicatrice (800) et son montage quand le volant d'inertie (30) est au repos.

3. Volant d'inertie (30) selon la revendication 1 ou 2, dans lequel l'élément de support (40) comprend un élément de support circonférentiel au moins en partie disposé radialement à l'extérieur de l'élément de masse (10).

4. Volant d'inertie (30) selon l'une quelconque des revendications précédentes, dans lequel la couronne indicatrice (800) est supportée par l'élément de support (40), et optionnellement dans lequel la couronne indicatrice (800) est montée sensiblement radialement à l'extérieur de l'élément de support (40), et optionnellement dans lequel la couronne indicatrice (800) a une rigidité inférieure ou sensiblement égale à celle de l'élément de support (40) pour se déformer différemment en rotation.

5. Volant d'inertie (30) selon l'une quelconque des revendications précédentes, dans lequel la couronne indicatrice (800) est montée sensiblement radialement à l'intérieur de l'élément de support (40), et optionnellement dans lequel la couronne indicatrice (800) a une rigidité supérieure ou sensiblement égale à celle de l'élément de support (40) pour se déformer différemment en rotation.

6. Volant d'inertie (30) selon la revendication 1, dans lequel l'élément de transmission (60) comprend un arbre et la couronne indicatrice (800) est montée sur l'arbre.

7. Volant d'inertie (30) selon l'une quelconque des revendications précédentes, dans lequel l'élément de support (40) comprend une fibre enroulée circonférentiellement, et la fibre enroulée circonférentiellement est préférablement en carbone, et le volant d'inertie (30) étant équilibré en tant qu'ensemble.

8. Volant d'inertie (30) selon les revendications 2 à 7, dans lequel l'ajustement serré présente une répartition non uniforme des contraintes à la limite d'interférence.

9. Volant d'inertie (30) selon l'une quelconque des revendications précédentes, comprenant en outre un détecteur pour détecter un comportement différentiel de la couronne indicatrice (800) et du volant d'inertie (30) en rotation, et optionnellement dans lequel le détecteur est configuré pour détecter un déséquilibre causé par ledit comportement différentiel.

10. Procédé de construction d'un volant d'inertie (30) comprenant les étapes qui consistent à disposer un enroulement (80) autour d'un élément de transmission (60) et d'une jante (50) et à monter une couronne indicatrice (800) par l'intermédiaire d'un montage de couronne indicatrice sur le volant d'inertie (30) pour une rotation avec celui-ci, dans lequel la jante (50) comprend un élément de masse (10) et un élément de support (40), et dans lequel la couronne indicatrice (800) est formée de façon à se comporter différemment d'un élément constitutif du volant d'inertie en rotation ;
**caractérisé en ce que** la couronne indicatrice (800) se déforme différemment de l'élément constitutif du volant d'inertie durant la rotation du volant d'inertie (30) pour produire une séparation du montage de la couronne indicatrice à une vitesse prédéterminée inférieure à la vitesse à laquelle on peut s'attendre à une défaillance du volant d'inertie.

11. Procédé selon la revendication 10, dans lequel la couronne indicatrice (800) est montée par ajustement serré.

12. Procédé selon la revendication 10, dans lequel l'élément de support (40) comprend un élément de support circonférentiel au moins en partie disposé radialement à l'extérieur de l'élément de masse (10) et la couronne indicatrice (800) est montée sur l'élément de support (40), et optionnellement dans lequel la couronne indicatrice (800) est montée sensiblement radialement à l'extérieur de l'élément de support (40) ou la couronne indicatrice (800) est montée sensiblement radialement à l'intérieur de l'élément de support (40).

13. Procédé selon les revendications 10 à 12, dans lequel la couronne indicatrice (800) est pressée sur ou dans le volant d'inertie (30) de façon à produire une précontrainte entre la couronne indicatrice (800) et son montage, la répartition des contraintes n'étant pas uniforme à la limite d'interférence, et optionnellement dans lequel le volant d'inertie (30) est équilibré lors de l'assemblage.

14. Procédé selon les revendications 10 à 13, dans lequel l'élément de masse (10) est ductile et dans lequel l'enroulement (80) ainsi que l'élément de support (40) sont précontraints par rotation du volant d'inertie (30) dans une étape de précontrainte de telle sorte que des forces centrifuges agissant sur l'élément de masse (10) le fassent céder vers l'extérieur, et optionnellement dans lequel, dans l'étape de précontrainte, on fait tourner le volant d'inertie (30) à une vitesse supérieure aux vitesses de rotation normales en cours de fonctionnement et inférieure à une vitesse sous l'effet de laquelle la précontrainte entre la couronne indicatrice (800) et son montage serait surmontée.

15. Procédé d'utilisation d'un volant d'inertie (30) selon l'une quelconque des revendications 1 à 9 et/ou selon ou fabriqué selon l'une quelconque des revendications 10 à 14, le procédé d'utilisation comprenant le fait de faire tourner le volant d'inertie (30) et de surveiller l'apparition d'un déséquilibre indiquant une surcharge dans le volant d'inertie (30).
